# EUROPEAN PATENT APPLICATION

(11) **EP 4 661 156 A1**
(43) Date of publication of application: **10.12.2025**
(21) Application number: 23934922.8
(22) Date of filing: 13.10.2023
(51) Int. Cl.: H01M 10/44, H02J 7/00, H02J 7/04

(54) **BATTERY, CHARGING METHOD THEREFOR, BATTERY MANAGEMENT SYSTEM AND ELECTRICAL DEVICE**

(30) Priority: 27.04.2023 WO PCT/CN2023/091303
(71) Applicant: Contemporary Amperex Technology Co., Limited, Ningde, Fujian 352100 (CN)
(72) Inventor: JI, Cheng, Ningde, Fujian 352100 (CN); LI, Baiqing, Ningde, Fujian 352100 (CN)
(74) Representative: Lorenz Seidler Gossel Part. mbB
(86) International application number: PCT/CN2023/124501
(87) International publication number: WO 2024/221753

(57) **Abstract**

This application provides a battery and a charging method thereof, a battery management system, and an electric device, capable of improving charging performance of the battery. The battery includes at least one battery cell and a battery management system. A positive electrode active material of the battery cell includes LiMPO₄, and M includes element Mn and element Fe. The battery management system is configured to: control the battery to perform a first constant current charging until a voltage of the battery reaches a first cutoff voltage; control the battery to perform a constant voltage charging; and control the battery to perform a second constant current charging until the voltage of the battery reaches a second cutoff voltage, where the second cutoff voltage is greater than the first cutoff voltage.

## Description

This application claims priority to the PCT application No. PCT/CN2023/091303 filed with the China National Intellectual Property Administration on April 27, 2023, and entitled "CHARGING METHOD AND APPARATUS, ELECTRONIC DEVICE, AND COMPUTER-READABLE STORAGE MEDIUM," which is incorporated herein by reference in its entirety.

### TECHNICAL FIELD

This application relates to the field of battery technology, and particularly, to a battery and a charging method thereof, a battery management system, and an electric device.

### BACKGROUND

With the development of the times, electric vehicles, due to advantages such as high environmental friendliness, low noise, and low operating costs, have significant market prospects and can effectively promote energy conservation and emission reduction, benefiting societal development and progress.

For electric vehicles, battery technology is a critical factor influencing their development. Therefore, how to enhance the charging performance of batteries has become an urgent issue to address.

### SUMMARY

This application provides a battery and a charging method thereof, a battery management system, and an electric device, capable of improving the charging performance of the battery.

According to a first aspect, a battery is provided, including at least one battery cell and a battery management system, a positive electrode active material of the battery cell includes LiMPO₄, and M includes element Mn and element Fe. The battery management system is configured to: control the battery to perform a first constant current charging until a voltage of the battery reaches a first cutoff voltage; control the battery to perform a constant voltage charging; and control the battery to perform a second constant current charging until the voltage of the battery reaches a second cutoff voltage, where the second cutoff voltage is greater than the first cutoff voltage.

The battery in this application adopts the LiMPO₄ material as the positive electrode active material, where M includes the element Mn and the element Fe, offering advantages such as high energy density and large capacity. However, when the LiMPO₄ material serves as the positive electrode active material of the battery, the charging process sequentially undergoes a charging plateau corresponding to the element Fe and a charging plateau corresponding to the element Mn, and during the voltage plateau stage corresponding to the element Mn, the delithiation of the positive electrode active material is relatively difficult, making it challenging to fully utilize the capacity of the battery. To address this, after performing constant current charging and constant voltage charging on the battery, a low-current constant current charging is applied to charge the battery to a higher voltage, which facilitates the delithiation of lithium ions, enabling the capacity of the battery to be fully utilized.

In some possible embodiments, the battery management system is specifically configured to: control the battery to perform the constant voltage charging until a current of the battery reaches a first cutoff current, where the first cutoff current is greater than a second cutoff current, the second cutoff current being the current of the battery when the battery is subjected to the constant voltage charging until a fully charged state is reached.

In this embodiment, since the current gradually decreases during the constant voltage charging stage, and the first cutoff current is greater than the second cutoff current, as compared with the case of performing constant voltage charging until the second cutoff current, the time consumed for performing constant voltage charging to the first cutoff current is reduced, thereby improving charging efficiency.

In some possible embodiments, a range of the first cutoff current includes 0.02C to 0.1C; and further, optionally, the range of the first cutoff current includes 0.05C to 0.1C.

The first cutoff current is greater than the second cutoff current, and the second cutoff current is typically 0.02C. Therefore, the first cutoff current can be set within the range of 0.02C to 0.1C. If the LiMPO₄ material is used as the positive electrode active material, the delithiation speed of lithium ions significantly decreases after the battery is subjected to constant voltage charging to reach a current of 0.05C. Therefore, optionally, the first cutoff current can be set within the range of 0.05C to 0.1C to save the time spent in the conventional constant voltage charging stage when the current is below 0.05C.

In some possible embodiments, the first cutoff voltage is greater than or equal to a plateau voltage corresponding to the element Mn in the positive electrode active material.

In this embodiment, since an overpotential at the cathode facilitates the delithiation of lithium ions, setting the first cutoff voltage to be greater than or equal to the voltage plateau corresponding to the element Mn facilitates the delithiation of lithium ions of the positive electrode active material from the cathode during the voltage plateau stage corresponding to the element Mn.

In some possible embodiments, a range of the first cutoff voltage includes 3.97 V to 4.15 V; and further, optionally, the range of the first cutoff voltage includes 4.00 V to 4.15 V.

In this embodiment, since the voltage plateau corresponding to the element Mn is typically 3.97 V, the first cutoff voltage needs to be greater than 3.97 V to facilitate the delithiation of lithium ions from the cathode, and to reduce oxidation issues of the electrode plate and electrolyte caused by an excessively high cutoff voltage, the first cutoff voltage needs to be less than or equal to 4.15 V. Therefore, the first cutoff voltage can be within the range of 3.97 V to 4.15 V; and further, optionally, the first cutoff voltage can be within the range of 4.0 V to 4.15 V.

In some possible embodiments, a difference between the second cutoff voltage and the first cutoff voltage is within a range of 0.1 V to 0.3 V.

In this embodiment, the second cutoff voltage reached by the second constant current charging is greater than the first cutoff voltage. Increasing the voltage to facilitate the delithiation of lithium ions further enhances the battery capacity. However, to reduce the time the battery spends in a high-voltage stage and extend the battery lifespan, the second cutoff voltage should not exceed the first cutoff voltage by too much. Therefore, setting the difference between the second cutoff voltage and the first cutoff voltage within the range of 0.1 V to 0.3 V can both enhance the charging capacity of the battery and reduce the impact on the battery lifespan.

Referring to the preferred range of the first cutoff voltage, a range of the second cutoff voltage can include 4.1 V to 4.3 V; and further, optionally, the range of the second cutoff voltage includes 4.15 V to 4.25 V.

A first charging current used for the first constant current charging can be within a suitable range to meet the charging requirements of the battery. Optionally, a range of the first charging current used for the first constant current charging includes 0.1C to 4C. For example, the first charging current can be 0.33C.

In some possible embodiments, a range of a second charging current used for the second constant current charging includes 0.01C to 0.1C.

In this embodiment, performing the second constant current charging on the battery after the constant voltage charging can further increase the voltage of the battery, accelerating the delithiation at the cathode, and enabling the capacity of the battery to be fully utilized. To reduce the duration, the battery spends in a high-voltage stage and minimize the occurrence of electrochemical oxidation inside the battery, the second charging current used for the second constant current charging needs to be within a suitable range. Optionally, the second charging current is within the range of 0.01C to 0.1C. For example, the second charging current is 0.05C.

In some possible embodiments, the positive electrode active material includes at least one of the following materials:
LiMn_{1-y}Fe_{y}PO₄, where y is any value in a range of 0.001 to 0.5;
Li₁₊ₜMn_{1-c}Fe_{c}P_{1-z}R_{z}O₄, where t is any value in a range of -0.100 to 0.100, c is any value in a range of 0.001 to 0.500, z is any value in a range of 0.001 to 0.100, and R includes one or more elements selected from B, S, Si, and N; and
Li_{1+w}CₘMn₁₋ᵤFeᵤP₁₋ₐRₐO₄₋ₙDₙ, where C includes one or more elements selected from Zn, Al, Na, K, Mg, Nb, Mo, and W, R includes one or more elements selected from B, S, Si, and N, D includes one or more elements selected from S, F, Cl, and Br, w is any value in a range of -0.100 to 0.100, u is any value in a range of 0.001 to 0.500, a is any value in a range of 0.001 to 0.100, n is any value in a range of 0.001 to 0.1, and m is any value in a range of 0.9 to 1.1.

According to a second aspect, a charging method of a battery is provided, where the battery includes at least one battery cell, a positive electrode active material of the battery cell includes LiMPO₄, M includes element Mn and element Fe, and the charging method includes: controlling the battery to perform a first constant current charging until a voltage of the battery reaches a first cutoff voltage; controlling the battery to perform a constant voltage charging; and controlling the battery to perform a second constant current charging until the voltage of the battery reaches a second cutoff voltage, where the second cutoff voltage is greater than the first cutoff voltage.

In some possible embodiments, the controlling the battery to perform a constant voltage charging includes: controlling the battery to perform the constant voltage charging until a current of the battery reaches a first cutoff current, where the first cutoff current is greater than a second cutoff current, the second cutoff current being the current of the battery when the battery is subjected to the constant voltage charging until a fully charged state is reached.

In some possible embodiments, a range of the first cutoff current includes 0.02C to 0.1C, or 0.05C to 0.1C.

In some possible embodiments, the first cutoff voltage is greater than or equal to a plateau voltage corresponding to the element Mn in the positive electrode active material.

In some possible embodiments, a range of the first cutoff voltage includes 3.97 V to 4.15 V, or 4.0 V to 4.15 V.

In some possible embodiments, a difference between the second cutoff voltage and the first cutoff voltage is within a range of 0.1 V to 0.3 V.

In some possible embodiments, a range of the second cutoff voltage includes 4.1 V to 4.3 V, or 4.15 V to 4.25 V.

In some possible embodiments, a range of a first charging current used for the first constant current charging includes 0.1C to 4C.

In some possible embodiments, the first charging current is 0.33C.

In some possible embodiments, a range of a second charging current used for the second constant current charging includes 0.01C to 0.1C.

In some possible embodiments, the second charging current is 0.5C.

In some possible embodiments, the positive electrode active material includes at least one of the following materials:
LiMn_{1-y}Fe_{y}PO₄, where y is any value in a range of 0.001 to 0.5;
Li₁₊ₜMn_{1-c}Fe_{c}P_{1-z}R_{z}O₄, where t is any value in a range of -0.100 to 0.100, c is any value in a range of 0.001 to 0.500, z is any value in a range of 0.001 to 0.100, and R includes one or more elements selected from B, S, Si, and N; and
Li_{1+w}CₘMn₁₋ᵤFeᵤP₁₋ₐRₐO₄₋ₙDₙ, where C includes one or more elements selected from Zn, Al, Na, K, Mg, Nb, Mo, and W, R includes one or more elements selected from B, S, Si, and N, D includes one or more elements selected from S, F, Cl, and Br, w is any value in a range of -0.100 to 0.100, u is any value in a range of 0.001 to 0.500, a is any value in a range of 0.001 to 0.100, n is any value in a range of 0.001 to 0.1, and m is any value in a range of 0.9 to 1.1.

According to a third aspect, a battery management system is provided, configured to perform the charging method of the battery described in the first aspect or any possible embodiment of the first aspect, where the battery includes at least one battery cell, a positive electrode active material of the battery cell includes LiMPO₄, and M includes element Mn and element Fe.

According to a fourth aspect, an electric device is provided, including the battery described in the first aspect or any possible embodiment of the first aspect.

According to a fifth aspect, a charging device is provided, including a processor and a memory, where the memory is configured to store a computer program, and the processor is configured to call and run the computer program stored in the memory to perform the method described in the second aspect or any possible embodiment of the second aspect.

According to a sixth aspect, a computer-readable storage medium is provided, configured to store a computer program, where when the computer program is executed by a computing device, the computing device implements the method described in the second aspect or any embodiment of the second aspect.

### BRIEF DESCRIPTION OF DRAWINGS

To more clearly illustrate the technical solutions of the embodiments of this application, the drawings required for use in the embodiments of this application are briefly introduced below. It is apparent that the drawings described below are merely some embodiments of this application. For those of ordinary skill in the art, other drawings can be obtained based on these drawings without creative effort.
FIG. 1 is a schematic block diagram of a charging system to which an embodiment of this application may be applied.
FIG. 2 is a schematic block diagram of a battery according to an embodiment of this application.
FIG. 3 is a schematic diagram of changes in voltage and current during constant current charging and constant voltage charging.
FIG. 4 is a schematic flowchart of a charging method of a battery according to an embodiment of this application.
FIG. 5 is a schematic diagram of an electric device according to an embodiment of this application.

### DESCRIPTION OF EMBODIMENTS

To make the objectives, technical solutions, and advantages of some embodiments of this application clearer, the following clearly describes the technical solutions in some embodiments of this application with reference to the accompanying drawings in some embodiments of this application. Apparently, these embodiments described are some rather than all embodiments of this application. All other embodiments obtained by a person of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "have", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance. "Perpendicular" is not perpendicular in the strict sense but within an allowable range of error. "Parallel" is not parallel in the strict sense but within an allowable range of error.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described in this application may be combined with other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application indicates an "or" relationship between contextually associated objects.

In some embodiments of this application, like reference signs denote like components, and for brevity, in different embodiments, detailed descriptions of like components are not repeated. It should be understood that as shown in the accompanying drawings, sizes such as thickness, length, and width of various members and sizes such as thickness, length, and width of integrated devices in the embodiments of this application are merely for illustrative purposes and should not constitute any limitations on this application.

A battery generally is a single physical module that includes one or more battery cells for providing a higher voltage and capacity. For example, the battery may be a battery module, where multiple battery cells are arranged and fixed to form one battery module. For another example, the battery may be a battery pack, where the battery includes battery cells and a box, and the battery cells or battery module is accommodated within the box.

The technical solutions described in this embodiment of this application are all applicable to various apparatuses that use batteries, for example, cell phones, portable devices, laptop computers, battery scooters, electric toys, power tools, electric vehicles, ships, and spacecraft, for example, spacecraft including aircraft, rockets, space shuttles, and spacecraft.

It should be understood that the technical solutions described in this embodiment of this application are not limited to the apparatus described above, and can be applied to all apparatuses that use batteries, but for the sake of concise description, in the following embodiments, the electric vehicle is used as an example.

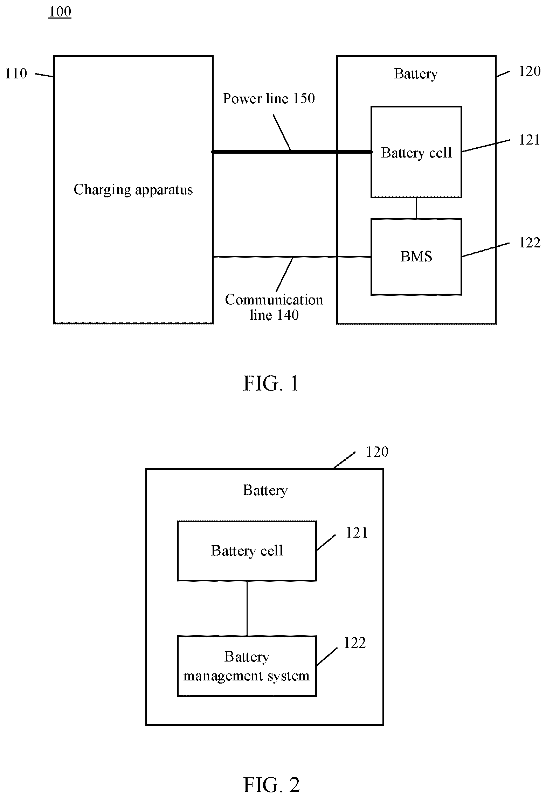

FIG. 1 is an architecture diagram of a charging system 100 to which an embodiment of this application is applicable. As shown in FIG. 1, the charging system 100 includes a charging apparatus 110 and a battery 120. Optionally, the battery 120 may be a battery in an electric device, such as a vehicle, or a battery in other application scenarios.

Optionally, the battery 120 includes a battery cell 121 and a battery management system (battery management system, BMS) 122. The BMS 122 is configured to monitor a state of the battery cell 121, perform intelligent management and maintenance on the battery cell 121, and reduce the probability of overcharging, over-discharging, and the like of the battery 120.

The charging apparatus 110 is configured to supply electrical energy to the battery cell 121 in the battery 120 and/or control discharging of the battery cell 121. For example, the charging apparatus 110 may be a regular charging pile, a supercharging pile, a charging pile supporting a vehicle-to-grid (vehicle-to-grid, V2G) mode, a charger, or other apparatuses used for charging and/or discharging the battery. A specific type and specific application scenario of the charging apparatus 110 are not limited in the embodiments of this application.

Optionally, as shown in FIG. 1, the charging apparatus 110 is connected to the battery cell 121 through a power line 150 and connected to the BMS 122 through a communication line 140, where the communication line 140 is configured to enable information interaction between the charging apparatus 110 and the BMS 122. For example, the communication line 140 includes, but is not limited to, a controller area network (controller area network, CAN) communication bus or a daisy chain (daisy chain) communication bus.

Optionally, in addition to communicating with the BMS 122 through the communication line 140, the charging apparatus 110 may also communicate with the BMS 122 through a wireless network. The embodiments of this application do not specifically limit the type of wired communication or wireless communication between the charging apparatus 110 and the BMS 122.

As shown in FIG. 2, an embodiment of this application provides a battery 120, including at least one battery cell 121 and a battery management system 122. A positive electrode active material of the battery cell 121 is lithium manganese iron phosphate, hereinafter also denoted as LiMPO₄, where M includes element Mn and element Fe. The battery management system 122 is configured to:
control the battery 120 to perform a first constant current charging until a voltage of the battery 120 reaches a first cutoff voltage;
control the battery 120 to perform a constant voltage charging; and
control the battery 120 to perform a second constant current charging until the voltage of the battery 120 reaches a second cutoff voltage, where the second cutoff voltage is greater than the first cutoff voltage.

That is, the charging process of the battery using LiMPO₄ as the positive electrode active material and targeted by this embodiment includes three stages: first constant current charging → constant voltage charging → second constant current charging.

Herein, the battery management system 122 may be, for example, the BMS 122 shown in FIG. 1, or another control module capable of controlling the temperature of the battery 120.

The battery 120 includes at least one battery cell 121, where the positive electrode active material of the battery cell 121 is the LiMPO₄ material, and M in the LiMPO₄ material may include the element Mn and the element Fe. Compared with a conventional battery using a LiFePO₄ material as a positive electrode active material, the battery 120 using the LiMPO₄ material as the positive electrode active material has a higher voltage plateau, with an energy density approximately 15% higher than that of the battery using the LiFePO₄ material, offering advantages such as high energy density and large capacity, and featuring lower cost and higher safety.

However, when the LiMPO₄ material serves as the positive electrode active material of the battery 120, the charging process sequentially undergoes a charging plateau corresponding to the element Fe and a charging plateau corresponding to the element Mn. During the charging plateau stage corresponding to the element Mn, a delithiation depth of the positive electrode active material is low, making it difficult to fully utilize a capacity of the battery 120, and the delithiation speed of the positive electrode active material is low, thereby affecting the charging performance of the battery 120 and reducing user experience.

The charging capacity of the battery 120 is closely related to the delithiation depth at the cathode. After performing constant current charging on the battery 120 until the voltage of the battery 120 reaches a cutoff voltage, performing constant voltage charging on the battery 120 can eliminate polarization inside the battery cell 121, enabling its capacity to be fully utilized. In conventional batteries of LFP and NCM chemical system, the polarization of the battery cell mainly arises from accumulated polarization before constant voltage charging. However, for the battery 120 using the LiMPO₄ material as the positive electrode active material, due to the large diffusion impedance during the charging plateau stage corresponding to the element Mn in the LiMPO₄ material, the delithiation of lithium ions becomes more difficult. After the battery 120 undergoes constant current charging until its voltage reaches the cutoff voltage, many lithium ions remain not fully delithiated. Therefore, constant voltage charging is required to fully delithiate the remaining lithium ions to leverage the capacity advantage of the material.

For conventional batteries 120 of LFP and NCM chemical systems, the constant voltage charging time is relatively short, typically a cutoff current such as 0.02C is reached in about 15 minutes. However, for the battery 120 using the LiMPO₄ material as the positive electrode active material, due to the relatively poor kinetic performance during the charging plateau stage corresponding to the element Mn, the time required for constant voltage charging to reach the cutoff current is significantly longer than the constant voltage charging time for conventional batteries 120 of LFP and NCM chemical systems. Certainly, to fully utilize the capacity of the battery 120, the battery 120 can be charged to a higher voltage for constant voltage charging. However, for the battery 120 using the LiMPO₄ material as the positive electrode active material, prolonged constant voltage charging at high voltage can accelerate the lifespan degradation of the battery 120.

To this end, in the embodiments of this application, after performing constant current charging and constant voltage charging on the battery 120, a low-current constant current charging is applied to charge the battery 120 to a higher voltage, which facilitates the delithiation of lithium ions, enabling the capacity of the battery 120 to be fully utilized. Therefore, to a certain extent, this addresses the issue of difficulty in fully utilizing the capacity caused by using the LiMPO₄ material as the positive electrode active material of the battery 120.

It can be understood that in the embodiments of this application, the charging plateau refers to a stage in which an electrochemical reaction reaches a balanced state during the charging process. During the charging plateau, a potential of the battery fluctuates minimally with the SOC, or in other words, the potential of the battery remains relatively stable during the charging plateau.

In some embodiments, during the constant voltage charging stage described above, the battery management system 122 can control the battery 120 to perform the constant voltage charging until a current of the battery 120 reaches a first cutoff current, where the first cutoff current is greater than a second cutoff current, and the second cutoff current is a current of the battery 120 when the battery 120 is subjected to the constant voltage charging until a fully charged state is reached.

Since the current gradually decreases during the constant voltage charging process, the current of the battery 120 when the battery 120 reaches the fully charged state during the constant voltage charging of the battery 120 is the second cutoff current.

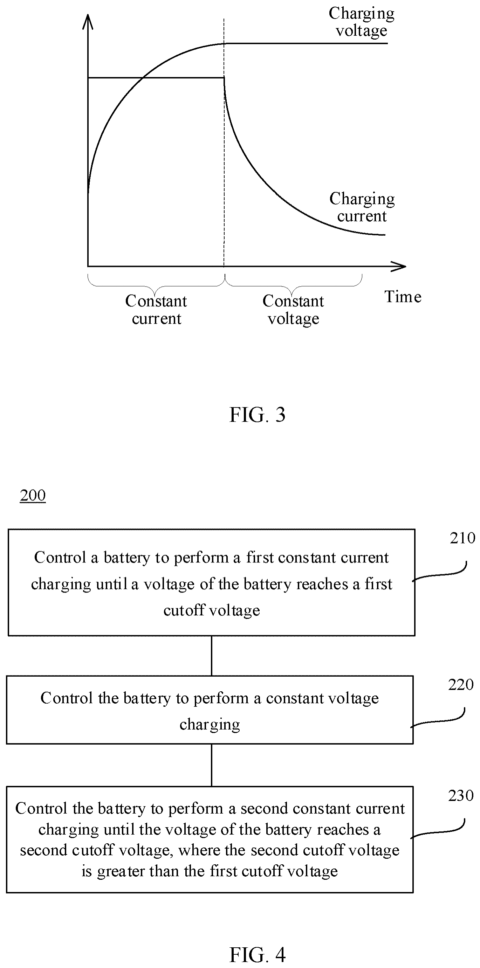

FIG. 3 illustrates changes in voltage and current during constant current charging and constant voltage charging. As shown in FIG. 3, during the constant current charging stage, a charging current of the battery 120 remains constant, while the voltage of the battery 120 gradually increases until the voltage reaches a cutoff voltage, entering the constant voltage charging stage. During the constant voltage charging stage, the voltage of the battery 120 remains constant, while the current of the battery 120 gradually decreases.

Typically, as shown in FIG. 3, the constant current and constant voltage charging of the battery 120 includes two stages: the first stage involves charging at a constant current, and when the voltage of the battery 120 reaches the first cutoff voltage, it transitions to the second stage for constant voltage charging, during which the current gradually decreases. When the charging current drops to the second cutoff current, the battery 120 reaches the fully charged state.

If the battery 120 is subjected to the first constant current charging until its voltage reaches the first cutoff voltage and then the battery 120 is subjected to constant voltage charging until the fully charged state is reached, the current of the battery 120 during the constant voltage charging stage gradually decreases to the second cutoff current, resulting in a relatively long time for constant voltage charging. In the embodiments of this application, after performing the first constant current charging on the battery 120 until its voltage reaches the first cutoff voltage, it is not necessary to directly charge the battery 120 until its current reaches the second cutoff current. Instead, the battery 120 is subjected to constant voltage charging until its current reaches the first cutoff current, where the first cutoff current is greater than the second cutoff current, and then the battery 120 is subjected to the second constant current charging to increase the voltage of the battery 120, thereby saving the time spent in the constant voltage charging stage in which the battery 120 is charged from the first cutoff current to the second cutoff current.

For example, it is assumed that the first cutoff voltage is V1, the second cutoff voltage is V2, V2 is > V1, the first cutoff current is I1, and the second cutoff current is I2, and I1 is > I2. After performing the first constant current charging on the battery 120 until its voltage reaches the first cutoff voltage V1, if constant voltage charging is then performed on the battery 120 until the fully charged state is reached, the current is the second cutoff current I2. It is assumed that the time consumed in this constant voltage charging stage is T1. However, if the battery 120 is subjected to constant voltage charging until its current reaches the first cutoff current I1, and then the battery 120 is subjected to the second constant current charging until its voltage reaches V2, the time consumed in the constant voltage stage is T2. On one hand, since the current gradually decreases during the constant voltage charging stage and I1 > I2, T2 < T1, reducing the constant voltage charging time. On the other hand, the battery 120 is subjected to constant current charging to a higher voltage V2 after constant voltage charging, accelerating the delithiation of lithium ions, enabling the cell capacity to be fully utilized, compensating for the capacity not utilized due to the shortened constant voltage charging duration, and significantly reducing the time the battery 120 spends in a high-voltage stage.

It can be seen that after performing the first constant current charging on the battery 120, a combination of constant voltage charging and second constant current charging can significantly improve the charging performance of the battery 120.

It should be noted that before performing constant current charging on the battery 120 at a low current to a higher voltage, the battery management system 122 can control the battery 120 to perform at least one constant voltage charging and/or at least one constant current charging. For example, after performing the first constant current charging and constant voltage charging on the battery in the foregoing charging manner, the battery 120 is subjected to second constant current charging at a low current to a higher voltage. For another example, the battery 120 can be subjected to multiple alternating constant current charging and constant voltage charging, and then the battery 120 is subjected to constant current charging at a low current to a higher voltage.

In some embodiments, a range of the first cutoff current includes 0.02C to 0.1C; and further, optionally, the range of the first cutoff current includes 0.05C to 0.1C.

The first cutoff current reached in the constant voltage charging in the embodiments of this application is greater than the second cutoff current when the battery 120 is in the fully charged state during conventional constant voltage charging. Since the second cutoff current of the battery 120 in the fully charged state is typically 0.02C, the first cutoff current can be set within the range greater than 0.02C and less than or equal to 0.1C.

Further, if the LiMPO₄ material is used as the positive electrode active material, the delithiation speed of lithium ions significantly decreases after the battery is subjected to constant voltage charging to reach a current of 0.05C. Therefore, optionally, the first cutoff current can be set within the range greater than or equal to 0.05C and less than or equal to 0.1C to save the time spent in the constant voltage charging stage when the current is below 0.05C.

In some embodiments, the first cutoff voltage is greater than or equal to a plateau voltage corresponding to the element Mn in the positive electrode active material. Since an overpotential at the cathode facilitates the delithiation of lithium ions, setting the first cutoff voltage to be greater than or equal to the voltage plateau corresponding to the element Mn facilitates the delithiation of lithium ions of the positive electrode active material from the cathode during the voltage plateau stage corresponding to the element Mn.

For example, since the voltage plateau corresponding to the element Mn is typically 3.97 V, a range of the first cutoff voltage can be set to be greater than 3.97 V. Further, optionally, the range of the first cutoff voltage can be set to be greater than or equal to 4.00 V. Additionally, to reduce oxidation issues of the electrode plate and electrolyte caused by an excessively high cutoff voltage, the first cutoff voltage can be set to be less than or equal to 4.15 V.

Thus, setting the first cutoff voltage to be greater than 3.97 V and less than or equal to 4.15 V, or further setting the first cutoff voltage to be greater than or equal to 4.00 V and less than or equal to 4.15 V facilitates the delithiation of lithium ions during the charging plateau stage corresponding to the element Mn and can also reduce damage to the battery cell 121 caused by high voltage.

The second cutoff voltage reached in the second constant current charging is greater than the first cutoff voltage reached in the first constant current charging, thereby increasing the voltage to facilitate the delithiation of lithium ions, and further enhancing the battery capacity. However, to reduce the time the battery spends in a high-voltage stage and extend the battery lifespan, the second cutoff voltage should not exceed the first cutoff voltage by too much. Therefore, in some embodiments, a difference between the second cutoff voltage and the first cutoff voltage can be set within a range of 0.1 V to 0.3 V, that is, the difference between the second cutoff voltage and the first cutoff voltage is greater than or equal to 0.1 V and less than or equal to 0.3 V, which can both enhance the charging capacity of the battery and reduce the impact on the lifespan of the battery 120.

Referring to the preferred range of the first cutoff voltage mentioned above, the second cutoff voltage can be set to be greater than the first cutoff voltage, and the range of the second cutoff voltage can include 4.1 V to 4.3 V. Further, optionally, the range of the second cutoff voltage can include 4.15 V to 4.25 V.

A first charging current used for the first constant current charging can be within a suitable range to meet the charging requirements of the battery. Optionally, a range of the first charging current used for the first constant current charging includes 0.1C to 4C. For example, the first charging current can be 0.33C.

After constant voltage charging, performing the second constant current charging on the battery 120 can further increase the voltage of the battery 120, accelerating the delithiation at the cathode, and enabling the capacity of the battery 120 to be fully utilized. To reduce the duration, the battery 120 spends in a high-voltage stage and minimize the occurrence of electrochemical oxidation inside the battery 120, a second charging current used for the second constant current charging needs to be within a suitable range. Optionally, a range of the second charging current used for the second constant current charging includes 0.01C to 0.1C. For example, the second charging current is 0.05C.

It can be understood that the second charging current used for the second constant current charging can be greater than the first charging current used for the first constant current charging, the second charging current can alternatively be less than the first charging current, or the second charging current can be equal to the first charging current, which is not limited in this application.

Below, with reference to Table 1, the duration required for charging the battery 120 based on different charging parameters and the results of capacity testing are described in detail.

A material of a negative electrode plate of the battery 120 used for testing was graphite, for example, including at least one of soft carbon, hard carbon, artificial graphite, and natural graphite. A graphite content of the negative electrode was 96.7%, a binder content was 1.5%, a coating weight of the negative electrode was 0.163 mg/1540 mm², a porosity was 27%, a coating thickness of the negative electrode was 0.216 mm, and a compacted density of the negative electrode was 1.65 g/cm³.

An electrolyte of the battery cell 121 was a solution being electronically insulating and ionically conductive, with one or more carbonate organic esters, such as ethylene carbonate, propylene carbonate, dimethyl carbonate, diethyl carbonate, and ethyl methyl carbonate being selected as solvents, and one or more lithium salts, such as LiPF₆, LiBF₄, LiBOB, LiAsF₆, Li(CF₃SO₂)₂N, LiCF₃SO₃, and LiClO₄ being selected as solutes.

A separator of the battery cell 121 was selected from a film made of one or more materials, such as polyethylene, polypropylene, non-woven fabric, and polyfiber, with electrochemical and chemical stability.

During a preparation process of a positive electrode plate of the battery cell 121, an active material LiMPO₄, conductive carbon black Super-P, and a binder PVDF were thoroughly mixed and stirred to uniformity in an NMP solvent system at a weight ratio of 97:1:2. Then, the resulting slurry was applied onto an Al foil with a controlled coating weight of 360 g/m², followed by drying, cold-pressing, slitting, and cutting to obtain a positive electrode plate.

During a preparation process of a negative electrode plate of the battery cell 121, graphite, conductive carbon black Super-P, and a binder SBR were thoroughly mixed and stirred to uniformity in an H2O solvent system at a weight ratio of 97.4:0.8:1.8. Then, the resulting slurry was applied onto a Cu foil with a controlled coating weight of 0.163 mg/1540 mm², followed by drying, cold-pressing, slitting, and cutting to obtain a negative electrode plate.

In preparing the battery cell 121, a PE/PP/PE three-layer porous polymer film was used as a separator. The positive electrode plate, the separator, and the negative electrode plate were wound in sequence, with the separator controlled to be positioned between the positive electrode plate and the negative electrode plate for separation, and misalignment between the positive electrode plate and the negative electrode plate, as well as between the positive and negative electrode plates and the separator, was controlled during winding to obtain a jelly roll, namely an electrode assembly, after winding. The electrode assembly was welded to a top cover of the battery cell 121 via tabs, followed by processes such as placing into a housing, baking, electrolyte injection, and formation, to obtain a qualified battery cell 121. The battery cell 121 can be used as the battery 120 to be tested. That is, the battery 120 including only one battery cell 121 is used as an example.

The specific charging process included three charging stages: first, performing the first constant current charging on the battery 120 based on the first charging current (0.33C) until the voltage of the battery 120 reached the first cutoff voltage V1 (4.00 V to 4.15 V); second, performing a constant voltage charging on the battery 120 until the current of the battery 120 reached the first cutoff current I1 (0.05C to 0.10C); and finally, performing the second constant current charging on the battery 120 based on the second charging current (0.01C to 0.10C) until the voltage of the battery 120 reached the second cutoff voltage V2 (4.10 V to 4.30 V), where I1 > I2, V2 > V1.

The charging times for all stages are recorded, and tests for the charging capacities and discharging capacities of the batteries 120 are conducted. The results in Table 1 are obtained.

**Table 1**

| First constant current charging | | | Constant voltage charging | | Second constant current charging | | | Charging duration (min) | Charging capacity (Ah) | Discharging capacity (Ah) |
|---|---|---|---|---|---|---|---|---|---|---|
| First charging current (C) | First cutoff voltage (V1) | Time (min) | First cutoff current (C) | Time (min) | Second charging current (C) | Second cutoff voltage (V2) | Time (min) | | | |
| 0.33 | 4.0 | 90 | 0.02 | 150 | \ | \ | \ | 240 | 141.1 | 138.2 |
| | | | 0.02 | 150 | 0.05 | 4.2 | 24 | 264 | 145.5 | 142.5 |
| | | | | | | 4.3 | 29 | 269 | 147.0 | 144.0 |
| | | | 0.05 | 45 | | 4.2 | 28 | 163 | 145.1 | 142.2 |
| | | | | | | 4.3 | 34 | 169 | 146.5 | 143.6 |
| | | | 0.10 | 38 | | 4.2 | 33 | 161 | 145.2 | 142.0 |
| | | | | | | 4.3 | 40 | 168 | 146.4 | 143.3 |
| | 4.1 | 160 | 0.02 | 120 | \ | \ | \ | 280 | 143.6 | 140.7 |
| | | | 0.02 | 120 | 0.05 | 4.2 | 17 | 297 | 148.0 | 145.0 |
| | | | | | | 4.3 | 21 | 301 | 149.5 | 146.5 |
| | | | 0.05 | 31 | | 4.2 | 21 | 212 | 147.4 | 144.5 |
| | | | | | | 4.3 | 25 | 216 | 149.3 | 146.2 |
| | | | 0.10 | 25 | | 4.2 | 26 | 211 | 147.5 | 144.3 |
| | | | | | | 4.3 | 32 | 217 | 148.6 | 145.7 |
| | 4.15 | 190 | 0.02 | 100 | \ | \ | \ | 290 | 143.8 | 141.1 |
| | | | 0.02 | 100 | 0.05 | 4.2 | 15 | 305 | 148.3 | 145.5 |
| | | | | | | 4.3 | 18 | 308 | 150.1 | 147.0 |
| | | | 0.05 | 24 | | 4.2 | 16 | 230 | 148.4 | 145.3 |
| | | | | | | 4.3 | 19 | 233 | 149.9 | 146.8 |
| | | | 0.10 | 15 | | 4.2 | 22 | 227 | 148.3 | 145.1 |
| | | | | | | 4.3 | 25 | 230 | 149.6 | 146.5 |

A conventional constant current and constant voltage charging scheme was used to perform constant current charging and constant voltage charging on the battery 120. For example, it is assumed that the charging process of the battery 120 includes: performing constant current charging on the battery 120 at the first charging current of 0.33C until the voltage of the battery 120 reached a cutoff voltage V1' = 4.1 V; and then performing constant voltage charging on the battery 120 until the current of the battery 120 reached a first cutoff current I1' = 0.02C. As shown in Table 1, a total charging duration of the battery 120 is T1 = 160 min + 120 min = 280 min, and a charging capacity and a discharging capacity of the battery 120 are 143.6 Ah and 140.7 Ah, respectively.

The charging scheme of the embodiments of this application was used. The battery 120 was subjected to the first constant current charging, constant voltage charging, and the second constant current charging. For example, it is assumed that the charging process of the battery 120 includes: performing the first constant current charging on the battery with a first charging current of 0.33C until the voltage of the battery 120 reached a first cutoff voltage V1 = 4.1 V; performing constant voltage charging on the battery 120 until the current of the battery 120 reaches a first cutoff current I1 = 0.05C; performing the second constant current charging on the battery 120 with a second charging current of 0.05C until the voltage of the battery 120 reached a second cutoff voltage V2 = 4.2 V, where the first cutoff current I1 = 0.05C was greater than the first cutoff current I1' = 0.02C. That is, constant voltage charging stopped when the current of the battery 120 reached 0.05C, and then the battery 120 was charged to a higher second cutoff voltage V2 = 4.2 V through the second constant current charging, thereby fully utilizing the capacity of the battery 120. As shown in Table 1, in this case, a total charging duration of the battery 120 is T2 = 160 min + 31 min + 21 min = 212 min, and a charging capacity and a discharging capacity of the battery 120 are 147.4 Ah and 144.5 Ah, respectively.

It can be seen that in the former case, the charging duration T1 of the battery 120 is equal to 280 min, while in the latter case, the charging duration T2 of the battery 120 is equal to 212 min, where T2 < T1. Therefore, the charging scheme of the embodiments of this application can significantly improve the charging efficiency of the battery 120.

Moreover, from the above description, it can be seen that the charging scheme of the embodiments of this application, while saving charging time, barely affects the charging capacity and discharging capacity of the battery 120 and may even enhance the charging capacity and discharging capacity of the battery 120.

For the charging results under other sets of charging parameters in Table 1, similar conclusions can be drawn. For brevity, comparisons with charging times and charging/discharging capacities under other sets of charging parameters are not repeated herein.

It can be seen that the charging scheme of the embodiments of this application can reduce the charging time of the battery 120, improve charging efficiency, and facilitate the enhancement of the charging capacity of the battery 120, thereby improving the charging performance of the battery 120.

In addition, it can be seen from Table 1 that since the time for the second constant current charging is significantly shorter than the time for the first constant current charging and also significantly shorter than the time for the constant voltage charging, the time the battery 120 spends at high voltage is relatively short, which helps reduce electrochemical oxidation inside the battery cell 121, thereby reducing the impact on the lifespan of the battery 120.

This application further provides a charging method 200 for the battery 120, used to charge the battery 120 described above. The method 200 may, for example, be executed by the battery management system 122. For instance, as shown in FIG. 4, the method 200 includes some or all of the following steps.

Step 210: Control the battery 120 to perform a first constant current charging until a voltage of the battery 120 reaches a first cutoff voltage.

Step 220: Control the battery 120 to perform a constant voltage charging.

Step 230: Control the battery 120 to perform a second constant current charging until the voltage of the battery 120 reaches a second cutoff voltage, where the second cutoff voltage is greater than the first cutoff voltage.

In some embodiments, the controlling the battery 120 to perform a constant voltage charging includes: controlling the battery 120 to perform the constant voltage charging until a current of the battery 120 reaches a first cutoff current, where the first cutoff current is greater than a second cutoff current, and the second cutoff current is the current of the battery 120 when the battery 120 is subjected to the constant voltage charging until a fully charged state is reached.

In some embodiments, a range of the first cutoff current includes 0.02C to 0.1C; and further, optionally, the range of the first cutoff current includes 0.05C to 0.1C.

In some embodiments, the first cutoff voltage is greater than or equal to a plateau voltage corresponding to the element Mn in the positive electrode active material.

In some embodiments, a range of the first cutoff voltage includes 3.97 V to 4.15 V; and further, optionally, the range of the first cutoff voltage includes 4.0 V to 4.15 V.

In some embodiments, a difference between the second cutoff voltage and the first cutoff voltage is within a range of 0.1 V to 0.3 V.

In some embodiments, a range of the second cutoff voltage includes 4.1 V to 4.3 V; and further, optionally, the range of the second cutoff voltage includes 4.15 V to 4.25 V.

In some embodiments, a range of a first charging current used for the first constant current charging includes 0.1C to 4C. For example, the first charging current is 0.33C.

In some embodiments, a range of a second charging current used for the second constant current charging includes 0.01C to 0.1C. For example, the second charging current is 0.05C.

It can be understood that for specific details of the charging method 200, reference can be made to the description of the battery 120 above. For brevity, details are not repeated herein.

From the above description, it can be seen that in the embodiments of this application, the battery 120 uses the LiMPO₄ material as the positive electrode active material. After performing the first constant current charging on the battery 120 until its voltage reaches the first cutoff voltage, the battery 120 is subjected to the constant voltage charging until its current reaches the first cutoff current, where the first cutoff current is less than the second cutoff current, and the second cutoff current is the current of the battery 120 when the battery 120 is subjected to the constant voltage charging until the fully charged state is reached. Finally, the second constant current charging is applied to charge the battery 120 at a low current until its voltage reaches the second cutoff voltage, where the second cutoff voltage is greater than the first cutoff voltage, which is more conducive to the delithiation of lithium ions, enabling the capacity of the battery 120 to be fully utilized. In addition, since the constant voltage charging time is shortened, the charging efficiency is improved.

The embodiments of this application may be applied to various types of batteries, particularly a battery 120 using a LiMPO₄ material as a positive electrode active material, where M in the LiMPO₄ material may include element Mn and element Fe. Below, the LiMPO₄ material is specifically described.

As one embodiment of the LiMPO₄ material, LiMPO₄ may be a compound with a chemical formula LiMn_{1-y}Fe_{y}PO₄, where y is any value in a range of 0.001 to 0.5.

A compound LiMn_{0.80}Fe_{0.20}PO₄ is used as an example to describe a preparation method of the compound LiMn_{0.80}Fe_{0.20}PO₄. The preparation method may include, for example, the following steps.

Step S1: Prepare Fe-doped manganese oxalate.

For example, 919.4 g of manganese carbonate and 231.7 g of ferrous carbonate are added to a mixer and thoroughly mixed for 6 hours, and a resulting mixture is transferred to a reactor, where 5 L of deionized water and 1260.6 g of oxalic acid dihydrate are added. The resulting mixture is heated to 80°C, and thoroughly stirred at 500 rpm for 6 hours to uniformity until the reaction terminates with no bubbles produced, to obtain an Fe-doped manganese oxalate suspension. Then, the suspension is filtered, dried at 120°C, and subjected to sand milling to obtain manganese iron oxalate particles with a particle size of 100 nm.

Step S2. Prepare LiMn_{0.80}Fe_{0.20}PO₄.

For example, 1791.4 g of manganese iron oxalate (denoted as C₂O₄Mn_{0.80}Fe_{0.20}•2H₂O) prepared in step S1, 369.4 g of lithium carbonate, and 1150.1 g of ammonium dihydrogen phosphate are taken and added to 20 L of deionized water for thorough stirring. They are mixed to uniformity and react at 80°C for 10 hours to obtain a slurry. The slurry is transferred to a spray drying device for spray drying granulation, followed by drying at a temperature of 250°C to obtain powder. In a protective atmosphere, such as 90% nitrogen and 10% hydrogen, the powder is sintered in a roller kiln at 700°C for 4 hours.

In another embodiment of the LiMPO₄ material, LiMPO₄ may be a compound with a chemical formula Li₁₊ₜMn_{1-c}Fe_{c}P_{1-z}R_{z}O₄, where t is any value in a range of -0.100 to 0.100, c is any value in a range of 0.001 to 0.500, z is any value in a range of 0.001 to 0.100, and R includes one or more elements selected from B, S, Si, and N.

The values of t, c, and z are configured to maintain electrical neutrality of the entire compound. Optionally, a ratio of c to 1-c may be 1:10 to 1:1, and further, 1:4 to 1:1. Herein, c represents a sum of stoichiometric numbers of the element Fe doped at the Mn site. Optionally, a ratio of z to 1-z may be 1:9 to 1:999, and further, 1:499 to 1:249. Herein, z represents a sum of stoichiometric numbers of the element R doped at the P site.

For example, a preparation method of a compound Li₁₊ₜMn_{1-c}Fe_{c}P_{1-z}R_{z}O₄ may include the following steps.

Step S1: Dissolve and stir a manganese source, an iron source, and an acid in a solvent to generate a suspension of a manganese salt doped with the element Fe, filter the suspension, and dry the filter cake to obtain a manganese salt doped with the element Fe.

Step S2: Add a lithium source, a phosphorus source, a source of element R, a solvent, and the manganese salt doped with the element Fe obtained from step S1 to a reaction vessel for grounding and mixing to obtain a slurry.

Step S3: Transfer the slurry obtained from step S2 to a spray drying device for spray drying granulation to obtain particles.

Step S4: Sinter the particles obtained from step S3 to obtain a positive electrode active material.

The manganese source is, for example, a manganese-containing substance that can be used to prepare lithium manganese phosphate, including but not limited to one or a combination of elemental manganese, manganese dioxide, manganese phosphate, manganese oxalate, and manganese carbonate. The iron source is, for example, selected from at least one of elemental iron, oxide, phosphate, oxalate, carbonate, and sulfate. The acid is, for example, selected from one or more of hydrochloric acid, sulfuric acid, nitric acid, phosphoric acid, and organic acid, such as oxalic acid. The source of the element R is, for example, selected from at least one of sulfate, borate, nitrate, and silicate of the element R.

A compound Li_{1.001}Mn_{0.999}Fe_{0.001}P_{0.999}Si_{0.001}O₄ is used as an example, and its preparation method may include:

Step S1: Prepare Fe-doped manganese oxalate.

For example, 1148.2 g of manganese carbonate and 1.2 g of ferrous carbonate are added to a mixer and thoroughly mixed for hours, and a resulting mixture is transferred to a reactor, where 5 L of deionized water and 1260.6 g of oxalic acid dihydrate are added. The resulting mixture is heated to 80°C, and stirred at 500 rpm for 6 hours for mixing to uniformity until the reaction terminates with no bubbles produced, to obtain an Fe-doped manganese oxalate suspension. Then, the suspension is filtered, dried at 120°C, and subjected to sand milling to obtain manganese iron oxalate particles with a particle size of 100 nm.

Step S2: Prepare Li_{1.001}Mn_{0.999}Fe_{0.001}P_{0.999}Si_{0.001}O₄.

1789.6 g of manganese iron oxalate (denoted as C₂O₄Mn_{0.999}Fe_{0.001}•2H₂O) prepared in step S1, 369.8 g of lithium carbonate, 1148.9 g of ammonium dihydrogen phosphate, and 0.8 g of silicic acid are taken and added to 20 L of deionized water for thorough stirring, and mixed to uniformity to react at 80°C for 10 hours to obtain a slurry. The slurry is transferred to a spray drying device for spray drying granulation, and dried at a temperature of 250°C to obtain powder. In a protective atmosphere, such as 90% nitrogen and 10% hydrogen, the powder is sintered in a roller kiln at 700°C for 4 hours.

In yet another embodiment of the LiMPO₄ material, LiMPO₄ may be a compound with a chemical formula Li_{1+w}CₘMn₁₋ᵤFeᵤP₁₋ₐRₐO₄₋ₙDₙ, where C includes one or more elements selected from Zn, Al, Na, K, Mg, Nb, Mo, and W, R includes one or more elements selected from B, S, Si, and N, D includes one or more elements selected from S, F, Cl, and Br, w is any value in a range of -0.100 to 0.100, u is any value in a range of 0.001 to 0.500, a is any value in a range of 0.001 to 0.100, n is any value in a range of 0.001 to 0.1, and m is any value in a range of 0.9 to 1.1.

Similarly, the values of w, u, a, and m are configured to maintain electrical neutrality of the entire compound.

For example, a preparation method of the compound Li_{1+w}CₘMn₁₋ᵤFeᵤP₁₋ₐRₐO₄₋ₙDₙ may include the following steps.

Step S1: Dissolve and stir a manganese source, an iron source, and an acid in a solvent to generate a suspension of a manganese salt doped with the element Fe, filter the suspension, and dry the filter cake to obtain a manganese salt doped with the element Fe.

Step S2: Add a lithium source, a phosphorus source, a source of element C, a source of element R, a source of element D, a solvent, and the manganese salt doped with the element Fe obtained from step S1 to a reaction vessel for grounding and mixing to obtain a slurry.

Step S3: Transfer the slurry obtained from step S2 to a spray drying device for spray drying granulation to obtain particles.

Step S4: Sinter the particles obtained from step S3 to obtain a positive electrode active material.

The source of element C is, for example, selected from at least one of simple substance, oxide, phosphate, oxalate, carbonate, and sulfate of the element C. The manganese source is, for example, a manganese-containing substance that can be used to prepare lithium manganese phosphate, including but not limited to one or a combination of elemental manganese, manganese dioxide, manganese phosphate, manganese oxalate, and manganese carbonate. The iron source is, for example, selected from at least one of elemental iron, oxide, phosphate, oxalate, carbonate, and sulfate. The acid is, for example, selected from one or more of hydrochloric acid, sulfuric acid, nitric acid, phosphoric acid, and organic acid, such as oxalic acid. The source of element R is, for example, selected from at least one of sulfate, borate, nitrate, and silicate of the element R. The source of element D is, for example, selected from at least one of simple substance and ammonium salt of element D.

For a case where the positive electrode active material may contain Li_{1+w}CₘMn₁₋ᵤFeᵤP₁₋ₐRₐO₄₋ₙDₙ, a magnitude of x is influenced by valence states of Fe and R and magnitudes of y and z to ensure that the entire system maintains electrical neutrality. If a value of x is too small, a lithium content of the entire system decreases, affecting a specific capacity of the material. A value of y limits a total amount of all doping elements. If y is too small, that is, a doping amount is too low, the doping element has no effect, and if y exceeds 0.5, a Mn content of the system is low, affecting a voltage plateau of the material. The element R is doped at the P site. Since a P-O tetrahedron is relatively stable, and a value of z that is too large affects the stability of the material, a value of a is limited to 0.001 to 0.100. More specifically, w is any value in a range of -0.100 to 0.100, u is any value in a range of 0.001 to 0.500, a is any value in a range of 0.001 to 0.100, n is any value in a range of 0.001 to 0.1, and m is any value in a range of 0.9 to 1.1. For example, 1+x is selected from a range of 0.9 to 1.1, such as 0.97, 0.977, 0.984, 0.988, 0.99, 0.991, 0.992, 0.993, 0.994, 0.995, 0.996, 0.997, 0.998, or 1.01; x is selected from a range of 0.001 to 0.1, such as 0.001 or 0.005; y is selected from a range of 0.001 to 0.5, such as 0.001, 0.005, 0.02, 0.05, 0.1, 0.15, 0.2, 0.25, 0.3, 0.34, 0.345, 0.349, 0.35, or 0.4; z is selected from a range of 0.001 to 0.1, such as 0.001, 0.005, 0.08, or 0.1; n is selected from a range of 0.001 to 0.1, such as 0.001, 0.005, 0.08, or 0.1; and the positive electrode active material is electrically neutral.

Unless otherwise specified, in the above chemical formulas, when a doping site has two or more elements, a limitation on the numerical range of w, u, a, or m is not only a limitation on the stoichiometric number of each element at that site but also a limitation on a sum of stoichiometric numbers of the elements at that site. For example, in a case of a compound with a chemical formula Li_{1+w}Mn₁₋ᵤFeᵤP₁₋ₐRₐO₄, if R includes two or more elements R1, R2, ..., Rn, stoichiometric numbers z1, z2, ..., zn of R1, R2, ..., Rn, respectively must each fall within a numerical range limited for z in this application, and a sum of z1, z2, ..., zn must also fall within that numerical range. Similarly, if C includes two or more elements, a limitation on a numerical range of a stoichiometric number of C has the same meaning as above.

This application further provides a battery management system 122, configured to perform the charging method 200 of the battery 120 described in any of the above embodiments, where the battery 120 includes at least one battery cell 121, and a positive electrode active material of the battery cell 121 includes LiMPO₄, where M includes element Mn and element Fe.

This application further provides an electric device, including the battery 120 described in any of the above embodiments, where the battery 120 is configured to provide a power source for the electric device.

The electric device may be, for example, a mobile phone, a portable device, a notebook computer, an electric scooter, an electric toy, an electric tool, an electric vehicle, a ship, or a spacecraft, where the spacecraft includes an airplane, a rocket, a space shuttle, or a spaceship.

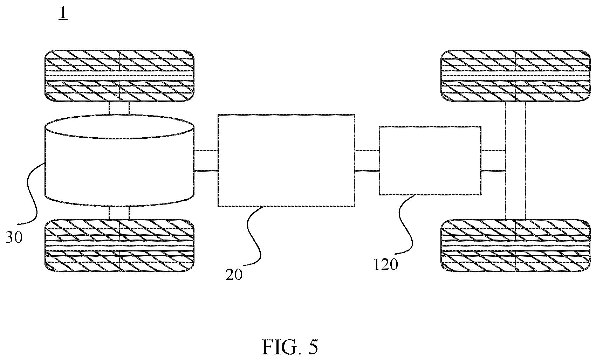

For example, FIG. 5 is a schematic structural diagram of a vehicle 1 according to an embodiment of this application. The vehicle 1 may be a fuel vehicle, a gas vehicle, or a new energy vehicle, and the new energy vehicle may be a battery electric vehicle, a hybrid electric vehicle, an extended range electric vehicle, or the like. A motor 30, a controller 20, and a battery 120 may be provided inside the vehicle 1, where the controller 20 is configured to control the battery 120 to supply power to the motor 30. For example, the battery 120 may be provided at the bottom, front, or rear of the vehicle 1. The battery 120 may be configured to supply power to the vehicle 1. For example, the battery 120 may be used as an operational power source for the vehicle 1 which is configured for a circuit system of the vehicle 1, for example, to satisfy power needs of start, navigation, and running of the vehicle 1. In another embodiment of this application, the battery 120 can be used not only as the operational power source for the vehicle 1, but also as a driving power source for the vehicle 1, replacing or partially replacing fossil fuel or natural gas to provide driving traction for the vehicle 1.

This application further provides a computer-readable storage medium, configured to store a computer program. When the computer program is executed by a computing device, the computing device implements the method performed by the battery management system 122 in any of the above embodiments. Optionally, the computer program may be a computer program in the battery management system 122 described above.

It should be noted that under the premise that there is no conflict, the embodiments described in this application and/or technical features in the embodiments may be arbitrarily combined, and technical solutions obtained after combination should also fall within the protection scope of this application.

The magnitudes of the numbers of the processes in the above embodiments of this application do not imply the order of execution. The execution order of each process should be determined by its function and inherent logic and should not constitute any limitation on the implementation process of the embodiments of this application.

Persons of ordinary skill in the art may be aware that the units and algorithmic steps in the examples described with reference to the embodiments disclosed herein can be implemented by electronic hardware or a combination of computer software and electronic hardware. Whether these function are performed by hardware or software depends on particular applications and design constraints of the technical solutions. Persons skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into the units is merely a logical function division, and another division manner may be used during actual implementation. For example, a plurality of units or components may be combined, or may be integrated into another system, or some features may be ignored or not performed. In addition, the displayed or discussed mutual couplings, direct couplings or communication connections may be indirect couplings or communication connections through some interfaces, apparatuses, or units, and may be in electrical, mechanical, or other forms.

Units described as separate components may or may not be physically separate. A component displayed as a unit may be one or more physical units, and may be located in one place, or may be distributed in a plurality of places. Some or all of the units may be selected based on an actual requirement, to achieve the objectives of the solutions in the embodiments.

Although this application has been described with reference to the preferred embodiments, various modifications to this application and replacements of the components therein with equivalents can be made without departing from the scope of this application. In particular, as long as there is no structural conflict, the various technical features mentioned in the embodiments can be combined in any manners. This application is not limited to the specific embodiments disclosed in this specification but includes all technical solutions falling in the scope of the claims.

## Claims

1. A battery **characterized by** comprising:
at least one battery cell, wherein a positive electrode active material of the battery cell comprises LiMPO₄, and M comprises element Mn and element Fe; and
a battery management system configured to:
control the battery to perform a first constant current charging until a voltage of the battery reaches a first cutoff voltage;
control the battery to perform a constant voltage charging; and
control the battery to perform a second constant current charging until the voltage of the battery reaches a second cutoff voltage, wherein the second cutoff voltage is greater than the first cutoff voltage.

2. The battery according to claim 1, **characterized in that** the battery management system is specifically configured to:
control the battery to perform the constant voltage charging until a current of the battery reaches a first cutoff current, wherein the first cutoff current is greater than a second cutoff current, the second cutoff current being a current of the battery when the battery is subjected to the constant voltage charging until a fully charged state is reached.

3. The battery according to claim 2, **characterized in that** a range of the first cutoff current comprises 0.02C to 0.1C, or 0.05C to 0.1C.

4. The battery according to any one of claims 1 to 3, **characterized in that** the first cutoff voltage is greater than or equal to a plateau voltage corresponding to the element Mn in the positive electrode active material.

5. The battery according to claim 4, **characterized in that** a range of the first cutoff voltage comprises 3.97 V to 4.15 V, or 4.0 V to 4.15 V.

6. The battery according to any one of claims 1 to 5, **characterized in that** a difference between the second cutoff voltage and the first cutoff voltage is within a range of 0.1 V to 0.3 V.

7. The battery according to claim 6, **characterized in that** a range of the second cutoff voltage comprises 4.1 V to 4.3 V, or 4.15 V to 4.25 V.

8. The battery according to any one of claims 1 to 7, **characterized in that** a range of a first charging current used for the first constant current charging comprises 0.1C to 4C.

9. The battery according to claim 8, **characterized in that** the first charging current is 0.33C.

10. The battery according to any one of claims 1 to 9, **characterized in that** a range of a second charging current used for the second constant current charging comprises 0.01C to 0.1C.

11. The battery according to claim 10, **characterized in that** the second charging current is 0.5C.

12. The battery according to any one of claims 1 to 11, **characterized in that** the positive electrode active material comprises at least one of the following materials:
LiMn_{1-y}Fe_{y}PO₄, wherein y is any value in a range of 0.001 to 0.5;
Li₁₊ₜMn_{1-c}Fe_{c}P_{1-z}R_{z}O₄, wherein t is any value in a range of -0.100 to 0.100, c is any value in a range of 0.001 to 0.500, z is any value in a range of 0.001 to 0.100, and R comprises one or more elements selected from B, S, Si, and N; and
Li_{1+w}CₘMn₁₋ᵤFeᵤP₁₋ₐRₐO₄₋ₙDₙ, wherein C comprises one or more elements selected from Zn, Al, Na, K, Mg, Nb, Mo, and W, R comprises one or more elements selected from B, S, Si, and N, D comprises one or more elements selected from S, F, Cl, and Br, w is any value in a range of -0.100 to 0.100, u is any value in a range of 0.001 to 0.500, a is any value in a range of 0.001 to 0.100, n is any value in a range of 0.001 to 0.1, and m is any value in a range of 0.9 to 1.1.

13. A charging method of a battery, **characterized in that** the battery comprises at least one battery cell, a positive electrode active material of the battery cell comprises LiMPO₄, M comprises element Mn and element Fe, and the charging method comprises:
controlling the battery to perform a first constant current charging until a voltage of the battery reaches a first cutoff voltage;
controlling the battery to perform a constant voltage charging; and
controlling the battery to perform a second constant current charging until the voltage of the battery reaches a second cutoff voltage, wherein the second cutoff voltage is greater than the first cutoff voltage.

14. The charging method according to claim 13, **characterized in that** the controlling the battery to perform a constant voltage charging comprises:
controlling the battery to perform the constant voltage charging until a current of the battery reaches a first cutoff current, wherein the first cutoff current is greater than a second cutoff current, the second cutoff current being a current of the battery when the battery is subjected to the constant voltage charging until a fully charged state is reached.

15. The charging method according to claim 14, **characterized in that** a range of the first cutoff current comprises 0.02C to 0.1C, or 0.05C to 0.1C.

16. The charging method according to any one of claims 13 to 15, **characterized in that** the first cutoff voltage is greater than or equal to a plateau voltage corresponding to the element Mn in the positive electrode active material.

17. The charging method according to claim 16, **characterized in that** a range of the first cutoff voltage comprises 3.97 V to 4.15 V, or 4.0 V to 4.15 V.

18. The charging method according to any one of claims 13 to 17, **characterized in that** a difference between the second cutoff voltage and the first cutoff voltage is within a range of 0.1 V to 0.3 V.

19. The charging method according to claim 18, **characterized in that** a range of the second cutoff voltage comprises 4.1 V to 4.3 V, or 4.15 V to 4.25 V.

20. The charging method according to any one of claims 13 to 19, **characterized in that** a range of a first charging current used for the first constant current charging comprises 0.1C to 4C.

21. The charging method according to claim 20, **characterized in that** the first charging current is 0.33C.

22. The charging method according to any one of claims 13 to 21, **characterized in that** a range of a second charging current used for the second constant current charging comprises 0.01C to 0.1C.

23. The charging method according to claim 22, **characterized in that** the second charging current is 0.5C.

24. The charging method according to any one of claims 13 to 23, **characterized in that** the positive electrode active material comprises at least one of the following materials:
LiMn_{1-y}Fe_{y}PO₄, wherein y is any value in a range of 0.001 to 0.5;
Li₁₊ₜMn_{1-c}Fe_{c}P_{1-z}R_{z}O₄, wherein t is any value in a range of -0.100 to 0.100, c is any value in a range of 0.001 to 0.500, z is any value in a range of 0.001 to 0.100, and R comprises one or more elements selected from B, S, Si, and N; and
Li_{1+w}CₘMn₁₋ᵤFeᵤP₁₋ₐRₐO₄₋ₙDₙ, wherein C comprises one or more elements selected from Zn, Al, Na, K, Mg, Nb, Mo, and W, R comprises one or more elements selected from B, S, Si, and N, D comprises one or more elements selected from S, F, Cl, and Br, w is any value in a range of -0.100 to 0.100, u is any value in a range of 0.001 to 0.500, a is any value in a range of 0.001 to 0.100, n is any value in a range of 0.001 to 0.1, and m is any value in a range of 0.9 to 1.1.

25. A battery management system **characterized in that** it is configured to perform the charging methodof the battery according to any one of claims 13 to 24, wherein the battery comprises at least one battery cell, a positive electrode active material of the battery cell comprises LiMPO₄, and M comprises element Mn and element Fe.

26. An electric device **characterized by** comprising the battery according to any one of claims 1 to 12.

27. A computer-readable storage medium **characterized in that** it is configured to store a computer program, wherein when the computer program is executed by a computing device, the computing device implements the charging method according to any one of claims 13 to 24.
